(19) Europäisches Patentamt
European Patent Office
Office européen des brevets

(11) Veröffentlichungsnummer : **0 024 593**
**B1**

(12) # EUROPÄISCHE PATENTSCHRIFT

(45) Veröffentlichungstag der Patentschrift : **21.03.84**

(51) Int. Cl.³ : **C 03 C 25/02**, G 02 B 5/172

(21) Anmeldenummer : **80104645.9**

(22) Anmeldetag : **06.08.80**

(54) **Verfahren zur Herstellung eines zugfesten Lichtwellenleiters.**

(30) Priorität : **21.08.79 DE 2933856**

(43) Veröffentlichungstag der Anmeldung : **11.03.81 Patentblatt 81/10**

(45) Bekanntmachung des Hinweises auf die Patenterteilung : **21.03.84 Patentblatt 84/12**

(84) Benannte Vertragsstaaten : **AT BE DE FR GB IT NL SE**

(56) Entgegenhaltungen :
**DE-A- 2 606 782**
**FR-A- 2 400 719**
**US-A- 3 980 390**
**US-A- 4 125 644**

(73) Patentinhaber : **SIEMENS AKTIENGESELLSCHAFT**
**Berlin und München Wittelsbacherplatz 2**
**D-8000 München 2 (DE)**

(72) Erfinder : **Ahne, Hellmut, Dr.**
**Heidestrasse 6**
**D-8551 Röttenbach (DE)**
Erfinder : **Aulich, Hubert, Dr.**
**Schwarzstrasse 3**
**D-8000 München (DE)**
Erfinder : **Weidinger, Friedrich**
**Rosenstrasse 50**
**D-8021 Taufkirchen (DE)**
Erfinder : **Rubner, Roland, Dr.**
**Buchenring 15**
**D-8551 Röttenbach (DE)**

**EP 0 024 593 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

# Verfahren zur Herstellung eines zugfesten Lichtwellenleiters

Die Erfindung betrifft ein Verfahren zur Herstellung eines zugfesten Lichtwellenleiters mit einer auf der Lichtleitfaser befindlichen Kunststoffschicht durch Aufbringen einer härtbaren Polymer-Vorstufe auf die Lichtleitfaser unmittelbar nach dem Faserziehprozeß.

Lichtwellenleiter bestehen im wesentlichen aus Lichtleitfasern, die ein solches Brechzahl-Profil aufweisen, daß eingestrahltes Licht allen Krümmungen folgend in ihnen geführt wird ; sie können deshalb als Übertragungsmedium dienen. Für die optische Nachrichtenübertragung werden Lichtwellenleiter benötigt, die neben geringen optischen Verlusten auch eine hohe Zugfestigkeit besitzen. Die heutzutage zur Nachrichtenübertragung verwendeten Lichtwellenleiter bestehen deshalb aus Glas, einem Material mit einer theoretisch sehr hohen Zugfestigkeit, die in der Bindungsstärke der Glaskomponenten begründet ist. Um diese hohe Zugfestigkeit auch in den Glasfasern zu erhalten, werden die Lichtleitfasern unmittelbar nach dem Ziehprozeß mit einer Schutzschichtaus Kunststoff unmantelt. Die optimale Schichtdicke des Kunststoffilmes richtet sich nach dessen mechanischen Eigenschaften, wie E-Modul und Härte, und beträgt im allgemeinen 10 bis 100 µm. Erfahrungsgemäß fuhren Schichtdicken unter 10 µm zu Verletzungen der Glasoberfläche, die die Zugfestigkeit der Faser drastisch vermindern.

Nach der Beschichtung wird die Faser in einem Extrudierprozeß mit einem lose- oder festsitzenden Kunststoffschlauch umhüllt, um die Lichtleitfasern zusätzlich vor mechanischen Belastungen zu schützen. Dieser Verkabelungsprozeß setzt voraus, daß die Zugfestigkeit der Faser nach dem Aufbringen des ersten Schutzfilmes ausreichend hoch ist, und daß der Erweichungspunkt der Kunststoffschicht oberhalb der im Extruderkopf auftretenden Temperatur liegt, damit es beim Extrudieren nicht zu einem Ankleben der Lichtleitfaser am Kunststoffschlauch kommt.

Bei der Beschichtung von Lichtleitfasern mit Kunststoff — zur Erzielung hoher Zugfestigkeitswerte und zum Schutz vor mechanischen Beschädigungen — durchläuft die nackte Faser unmittelbar nach dem Ziehprozeß eine oder mehrere Beschichtungsvorrichtungen, an die sich jeweils eine Trockenstrecke (Ofen) zur Härtung des Kunststoffes anschließt. Für diese Lackiertechnik können nichtreaktive Beschichtungsmaterialien, d. h. lösliche Polymere, wie beispielsweise Celluloseacetat, Polyvinylidenfluorid oder Polyesterimid, verwendet werden (vgl. « Siemens Forsch.- u. Entwickl.-Ber. », Band 6, 1977, Nr. 5, S. 314-319, sowie DE-A 27 29 648). Nachteilig bei dieser Technik ist, daß meist nur sehr dünne Schichten (ca. 5 µm) in einem Beschichtungsvorgang gleichmäßig aufgetragen werden können. Bei dickeren Schichten reißt der Flüssigkeitsfilm beim Einlauf der Faser in den Härtungsofen durch die plötzliche Viskositätserniedrigung und das Material fließt, bevor die Härtung einzetzt, an der Faser entlang, was eine ungleichmäßige Beschichtung zur Folge hat (sogenannter Perlenschnur-Effekt). Für ausreichend dicke Schutzschichten sind deshalb zwei oder mehrere Beschichtungsvorgänge erforderlich.

Auch bei reaktiven Beschichtungsmaterialien, wie beispielsweise Epoxidharze (vgl. « Siemens Forsch.-u. Entwickl.-Ber. », Band 7, 1978, Nr. 3, S. 158-165), die bislang lösungsmittelfrei zur Anwendung gelangen, können bei thermischer Härtung in einer Beschichtung nur dünne Schichten gleichmäßig aufgetragen werden. Bei Verwendung thermisch vernetzbarer Polysiloxane erreicht man pro Beschichtungszyklus zwar eine Dicke von ca. 30 µm, eine solche Schutzschicht ist jedoch sehr weich und leicht verletzbar, weshalb auch hier im allgemeinen ein zweiter Beschichtungsvorgang erforderlich ist.

Alternativ zu den genannten thermisch härtenden Systemen werden in neuerer Zeit auch UVvernetzbare Epoxidacrylate als Beschichtungsmaterial eingesetzt (US-Patentschrift 4 099 837). Dabei befindet sich auf der Glasfaser ein Polymerisierungsprodukt eines Gemisches von Polymer-Vorstufen, die durch Umsetzung von Acrylsäure mit einer Mischung eines aliphatischen und eines aromatischen Diglycidyläthers erhalten werden. Bei derartigen Systemen sollen in einem Beschichtungsvorgang zwar Schichtdicken von 20 bis 50 µm erreicht werden, ungeklärt ist derzeit allerdings noch das Alterungsverhalten der genannten Materialien und deren Einfluß auf die statische Ermüdung der Lichtleitfasern.

Aus der US-A-4 125 644 ist ein Verfahren zur Herstellung von Überzügen auf optischen Glasfasern bekannt, bei dem die Glasfasern in ein Bad eines flüssigen härtbaren Beschichtungsmaterials eingetaucht werden. Das Beschichtungsmaterial besteht aus einem äthylenisch ungesättigten Polyen, das wenigstens zwei reaktive ungesättigte C-C-Bindungen pro Molekül aufweist, und einem Polythiol mit wenigstens zwei Thiolgruppen pro Molekül ; dabei müssen insgesamt aber mehr als vier funktionelle Gruppen vorhanden sein. Bei diesem bekannten Verfahren kann nur durch Strahlung gehärtet werden (UV-Strahlung oder energiereiche ionisierende Strahlung), nicht aber thermisch. Darüber hinaus kann bei diesem Verfahren die Viskosität des Beschichtungsbades nur in relativ engen Grenzen variiert werden, und zwar über die Temperatur. Dabei sind aber einerseits nur Temperaturen bis 90 °C erlaubt, wobei im allgemeinen jedoch bei Raumtemperatur gearbeitet wird, und andererseits muß die Temperatur sehr genau eingestellt werden, um Schwankungen in der Viskosität zu vermeiden, die zu Schichtdickenschwankungen führen würden. Bei diesem Verfahren kann es deshalb auch erforderlich sein, die Kunststoffbeschichtung in mehreren aufeinanderfolgenden Verfahrensschritten aufzubringen.

Aus der FR-A-2 400 719 ist ein Verfahren zur Herstellung optischer Lichtleitfasern aus einem Faserrohling bekannt, bei dem die optische Faser aus dem Rohling gezogen und unmittelbar nach dem Ziehen mit einem Überzug versehen wird, und zwar mittels einer Zusammensetzung, die aus einem modifizierten 1,2-Additionspolybutadien und einem organischen Lösungsmittel besteht ; anschließend wird der Überzug bei einer Temperatur von 150 bis 350 °C getrocknet oder gehärtet. Bei diesem

Verfahren ist also nur eine thermische Härtung möglich. Darüber hinaus unterliegt bei diesem Verfahren die Härtungstemperatur einer wesentlichen Beschränkung, denn es sind nur Härtungstemperaturen zwischen 150 und 350 °C erlaubt ; daraus resultieren aber relativ lange Herstellungszeiten.

Aufgabe der Erfindung ist es, ein Verfahren der eingangs genannten Art zur Herstellung eines zugfesten Lichtwellenleiters, wobei eine härtbare Polymer-Vorstufe verwendet wird, weiter zu verbessern. Insbesondere soll erreicht werden, daß das Beschichtungsmaterial gegenüber der Glasoberfläche und gegen korrosive Umwelteinflüsse chemisch beständig ist, gut auf der Faseroberfläche haftet, die optischen Eigenschaften der Lichtleitfasern im Temperaturbereich von – 50 bis + 80 °C nicht beeinflußt und schnell zu glatten, klebfreien Schichten mit gleichmäßiger Dicke härtet, auch bei hohen Faserabziehgeschwindigkeiten ; dabei sollen relativ dicke Schichten in einem Beschichtungsvorgang erzeugt werden.

Dies wird erfindungsgemäß dadurch erreicht, daß auf die Lichtleitfaser als Polymer-Vorstufe aus einer Lösung ein oligomeres und/oder polymeres Polyadditions- oder Polykondensationsprodukt aus einer zwei für Additions- bzw. Kondensationsreaktionen geeignete Carboxyl-, Carbonsäurechlorid-, Amino-, Isocyanat- oder Hydroxyl-gruppen tragenden carbocyclischen oder heterocyclischen Verbindung und einem Diamin, einem Diisocyanat, einem Bis-Säurechlorid oder einer Dicarbonsäure aufgebracht wird, wobei die cyclischen Kettenglieder der Polymer-Vorstufe über Brücken mit Amidpartialstrukturen verbunden sind und die carbocyclische bzw. heterocyclische Verbindung in Nachbarstellung zu den für Additions- bzw. Kondensationsreaktionen geeigneten Gruppen teilweise Ester-, Amid-, urethan- oder Harnstoffgruppierungen besitzt, die gegebenenfalls ungesättigt sind, und daß nachfolgend mit aktinischem Licht bestrahlt und/oder thermisch behandelt wird, wobei die Polymer-Vorstufen in Polyimide, Polyisoindolochinazolindione, Polyoxazindione, Polychinazolindione oder Polyoxazinone übergeführt werden.

Das erfindungsgemäße Verfahren bietet insbesondere folgende Vorteile :

— ausreichend dicke und klebfreie Schutzschichten mit einer gleichmäßigen Dicke von etwa 20 bis 25 µm ;
— hohe Temperaturbeständigkeit der Schutzschicht, nämlich bis zu ca. 400 °C ;
— gute Haftung der Schutzschicht auf der Faseroberfläche;
— geringer Verlust an Lösungsmittel durch einen hohen Feststoffanteil der Lösung ;
— selbstverlöschende Eigenschaften der Schutzschicht.

Beim erfindungsgemäßen Verfahren durchläuft die Lichtleitfaser — zum Aufbringen der Kunststoffschicht — unmittelbar nach der Ziehzone eine Beschichtungsküvette, die mit löslichen oligomeren bis polymeren, polyfunktionellen Vorstufen eines hochwärmebeständigen Polymeren gefüllt ist. Die cycloaliphatischen, aromatischen oder heterocyclischen Kettenglieder dieser Vorstufen sind über Brücken mit Amidpartialstrukturen verbunden. Die Vorstufen besitzen darüber hinaus, benachbart zu den Brückengliedern, Ester-, Amid-, Urethan- oder Harnstoffgruppen, die vorzugsweise ungesättigter Natur sind. Derartige Verbindungen haben den Vorteil, daß sie sich, vorzugsweise durch Vernetzung, rasch verfestigen. Die Verfestigung erfolgt durch eine thermische Behandlung oder durch Bestrahlung mit aktinischem Licht. Durch Zusatz von monomeren und/oder oligomeren mono- oder polyfunktionellen Additiven kann die Vernetzung — durch thermische Behandlung oder durch Bestrahlung — noch weiter beschleunigt bzw. verstärkt werden. Neben einer möglichen Vernetzung erfolgt durch die thermische Behandlung insbesondere eine Cyclisierung, wodurch hochwärmebeständige Polymere, wie Polyimide, gebildet werden.

Als Lösungsmittel für die Polymer-Vorstufen kann vorteilhaft Dimethylacetamid oder n-Methylpyrrolidon gewählt werden ; allgemein kommen polare organische Lösungsmittel in Betracht. Durch geeignete Wahl der Vorstufe lassen sich in der Lösung Feststoffanteile bis zu 75 % erreichen, d. h. wesentlich höhere Konzentrationen als bei den sonst üblichen Lacksystemen vergleichbaren Aufbaus, bei denen der Feststoffgehalt lediglich ca. 20 % beträgt. Im Gegensatz beispielsweise zu den bekannten Polyesterimiden neigen nämlich die beim erfindungsgemäßen Verfahren eingesetzten Polymer-Vorstufen nicht zur Assoziation, so daß hohe Konzentrationen und hohe Schichtstärken erreicht werden können.

Als weiterer Vorteil kommt beim erfindungsgemäßen Verfahren hinzu, daß beim Einlaufen des Faser in den Trockenofen der Flüssigkeitsfilm auf der Faser durch die rasche Härtung der Vorstufe stabilisiert wird, wodurch ein Fließen und der daraus resultierende Perlenschnur-Effekt vermieden wird. Nach Durchlaufen der Trockenstrecke ist die Verfestigung abgeschlossen und das Lösungsmittel vollständig verdampft.

Mittels des erfindungsgemäßen Verfahrens können somit — durch einmaligen Auftrag — in rationeller Fertigung gleichmäßige, dicke Schutzschichten erzeugt werden, die eine hohe Wärmeformbeständigkeit, hohe chemische Resistenz und mechanische Festigkeit sowie Schwerbrennbarkeit aufweisen. Bei diesem Verfahren können — zur Vernetzungsbeschleunigung — ferner vorteilhaft Verbindungen wie ungesättigte s-Triazine (für die thermische Vernetzung), beispielsweise Triallylcyanurat, und Maleinimide (für die Strahlenvernetzung) eingesetzt werden. Darüber hinaus können auch Vernetzungsinitiatoren, wie Azo-bis-iso-butyronitril, Dibenzoylperoxid und aromatische Diazide, sowie Sensibilisatoren, wie Michlers Keton, Verwendung finden. Vorteilhaft können die nach dem erfindungsgemäßen Verfahren hergestellten Lichtwellenleiter ferner noch mit einer Gleitschicht versehen werden (vgl. dazu DE-A 27 29 648).

Die beim erfindungsgemäßen Verfahren eingesetzten Polymer-Vorstufen weisen im allgemeinen folgende Struktur auf :

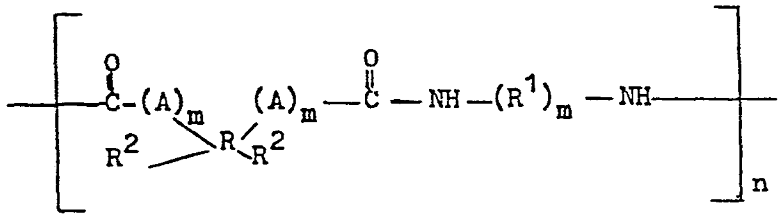

(1)

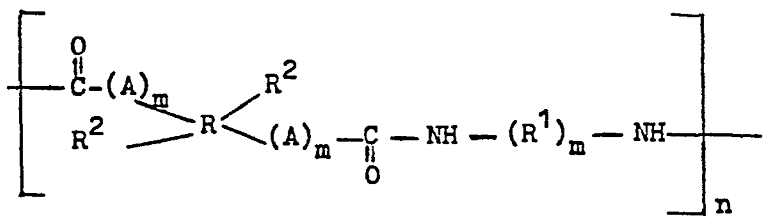

(2)

In den Formeln (1) und (2) bedeutet n eine ganze Zahl von 2 bis etwa 100 und m ist 0 oder 1.

Für R, $R^1$, $R^2$ und A gilt folgendes :

R ist ein — gegebenenfalls halogenierter — zumindest partiell aromatischer und/oder heterocyclischer tetravalenter, d. h. tetrafunktioneller Rest, bei dem jeweils zwei Valenzen in Nachbarstellung zueinander angeordnet sind ; weist der Rest R mehrere aromatische und/oder heterocyclische Strukturelemente auf, so befinden sich die Valenzpaare jeweils an endständigen derartigen Strukturelementen ;

$R^1$ ist ein — gegebenenfalls halogenierter — divalenter, d. h. difunktioneller Rest aliphatischer und/oder cycloaliphatischer, gegebenenfalls Heteroatome aufweisender, und/oder aromatischer und/oder heterocyclischer Struktur ;

$R^2$ ist ein — gegebenenfalls substituierter — über eine Carbonsäureester-, Carbonsäureamid-, Urethan- oder Harnstoffgruppe gebundener Alkyl-, Alkoxyalkyl-, Alkenyl- und/oder Arylrest oder ein — gegebenenfalls substituierter — (meth)acrylgruppenhaltiger Rest ;

A bedeutet —O— oder —NH—.

Die Reste R, $R^1$ und $R^2$ haben insbesondere folgende Bedeutung :

R = 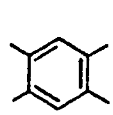 , 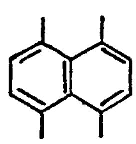 , 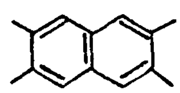 ,

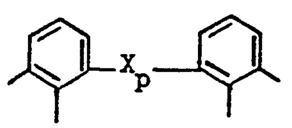 , 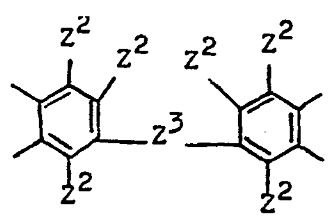 ,

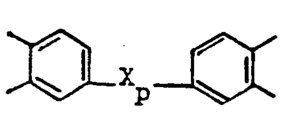 , 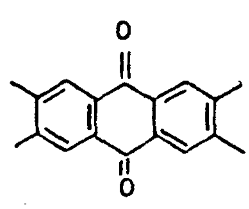 ,

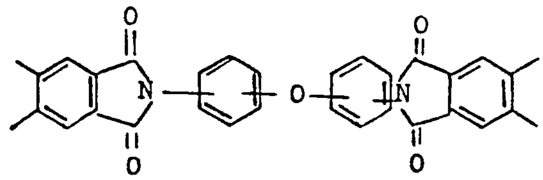 , 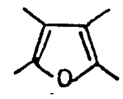

und

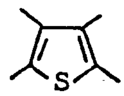 ,

wobei p = 0 oder 1 ist und X für einen der folgenden Reste steht.

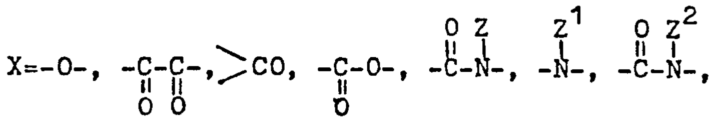

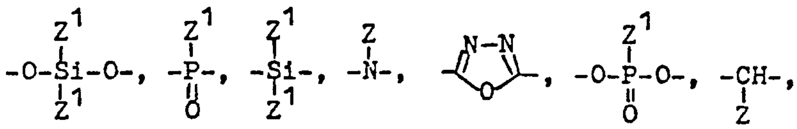

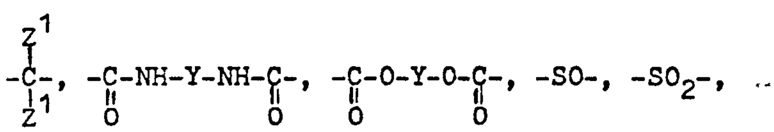

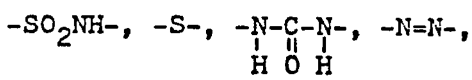

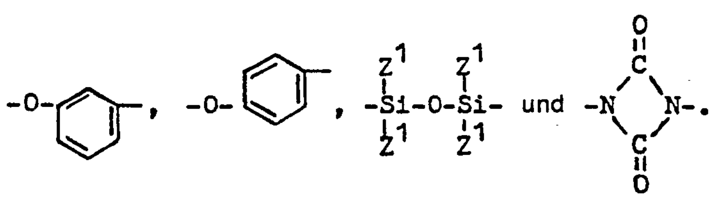

Für die weiteren Reste gilt :

Y = 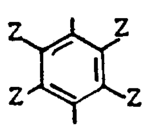 , $-(CH_2)_o-$ mit o = 2 bis 10, und

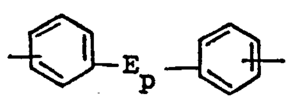 mit p = 0 oder 1,

Z = H oder Alkyl mit 1 bis 6 Kohlenstoffatomen,
$Z^1$ = Alkyl mit 1 bis 10 Kohlenstoffatomen oder Aryl,
$Z^2$ = Aryl oder Heteroaryl, und

$Z^3$ = 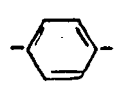 oder 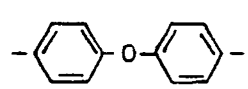 ;

E = 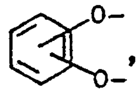, 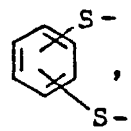, 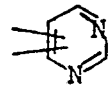, 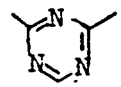,

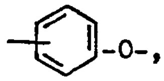

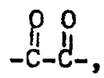, 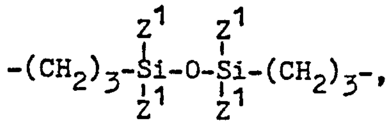, 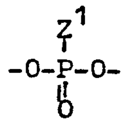, 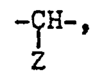

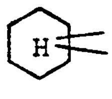, $-(CH_2)_q-$, $-(CF_2)_r-$, $-SO-$, $-SO_2-$,

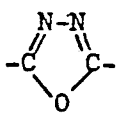, $-SO_2NH-$, 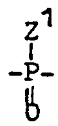, 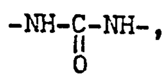, 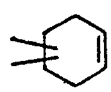,

$-N{=}N-$, 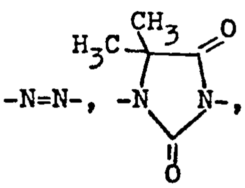, $-S-$, $-O-$, 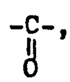, 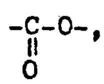, 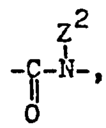

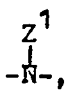, 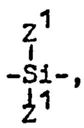, 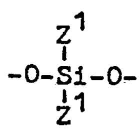 und 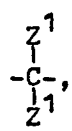

wobei q = 2 bis 14 und r = 2 bis 18, und $Z^1$ und $Z^2$ wie vorstehend definiert sind.

$R^1$ = 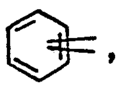, 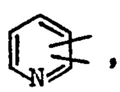, 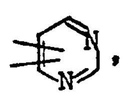, 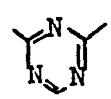,

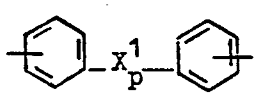,

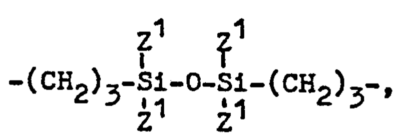, 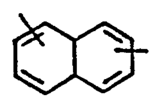, 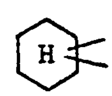,

$-(CH_2)_q-$, $-(CF_2)_r-$, 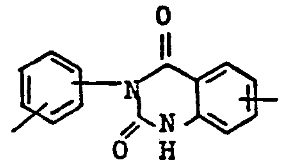, 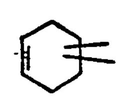,

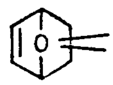, 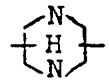, 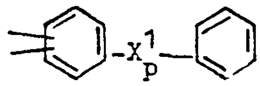,

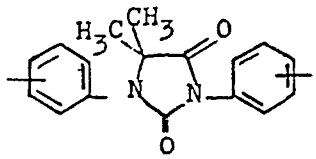, 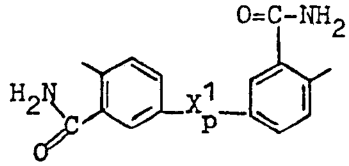

und

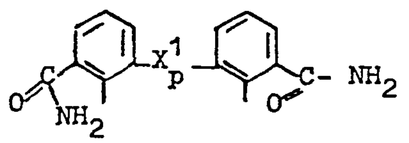,

wobei p = 0 oder 1, q = 2 bis 14 und r = 2 bis 18, und Z¹ wie vorstehend definiert ist;

$X^1 = -O-,\ -\underset{O}{\underset{\|}{C}}-\underset{O}{\underset{\|}{C}}-,\ >CO,\ -\underset{O}{\underset{\|}{C}}-O-,\ -\overset{O}{\overset{\|}{C}}-\overset{Z^2}{\overset{|}{N}}-,\ -\overset{Z^1}{\overset{|}{N}}-,\ -\underset{Z^1}{\underset{|}{\overset{Z^1}{\overset{|}{Si}}}}-,$

$-O-\underset{Z^1}{\underset{|}{\overset{Z^1}{\overset{|}{Si}}}}-O-,\ -\underset{O}{\underset{\|}{\overset{Z^1}{\overset{|}{P}}}}-,\ -\overset{Z}{\overset{|}{N}}-,$ 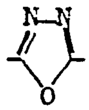, $-O-\underset{O}{\underset{\|}{\overset{Z^1}{\overset{|}{P}}}}-O-,\ -\underset{Z}{\underset{|}{CH}}-,\ -\underset{Z^1}{\underset{|}{\overset{Z^1}{\overset{|}{C}}}}-,$

$-\underset{Z^1}{\underset{|}{\overset{Z^1}{\overset{|}{Si}}}}-O-\underset{Z^1}{\underset{|}{\overset{Z^1}{\overset{|}{Si}}}}-,$ 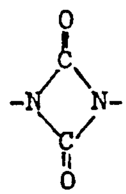, $-SO-,\ -SO_2-,\ -SO_2NH-,\ -S-,$

$-\underset{H}{\underset{|}{N}}-\underset{O}{\underset{\|}{C}}-\underset{H}{\underset{|}{N}}-,\ -N=N-,$ 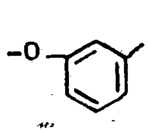, 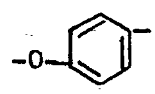

und

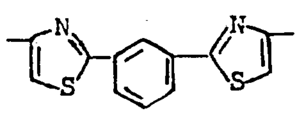,

wobei Z, Z¹ und Z² wie vorstehend definiert sind.

$R^2 = -X^2-CH_2-\overset{Y^2}{\overset{|}{C}}=CH_2,$ 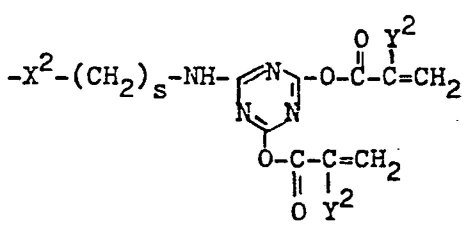,

$-X^2-\left[(CH_2)_s-O\right]_t-R^3,\quad -O-\underset{O}{\underset{\|}{C}}-NH-R^3,$

$$-NH-\underset{\overset{\|}{O}}{C}-NH-R^3,\quad -X^2-R^4 \quad \text{und} \quad -X^2-(CH_2)_s-O-\underset{\overset{\|}{O}}{C}-\overset{\overset{Y^2}{|}}{C}=CH_2;$$

dabei ist s = 2 bis 16 und t = 0 bis 4 ; fur die weiteren Reste gilt :

$$X^2 = -\underset{\overset{\|}{O}}{C}-O- \quad \text{und} \quad -\underset{\overset{\|}{O}}{C}-NH-,$$

$Y^2$ = —H und —$CH_3$,
$R^3$ = Alkyl, Alkenyl und Aryl, und
$R^4$ = Alkyl mit 1 bis 18 Kohlenstoffatomen.

Verbindungen der vorstehend beschriebenen Art, und zwar solche, die — über Carbonsäureestergruppierungen gebundene — strahlungsreaktive Gruppen aufweisen, sind an sich aus den deutschen Patentschriften 23 08 830, 24 37 348 und 24 37 422 bekannt. Sie dienen dort zur Herstellung von aus hochwärmebeständigen Polymeren bestehenden Reliefstrukturen. Bei dieser Art der Anwendung, die auf einem ganz anderen technischen Gebiet liegt, geht es im wesentlichen darum, daß sich unbestrahlte und bestrahlte Bereiche von Folien und Schichten, die aus Polymer-Vorstufen hergestellt werden, in chemischer Hinsicht unterschiedlich verhalten, d. h. ein unterschiedliches Löslichkeitsverhalten aufweisen. Eine derartige Eigenschaft ist bei der Herstellung von zugfesten Lichtwellenleitern aber nicht relevant. Die DE-C-2 308 830 vermag dem Fachmann deshalb auch keinerlei Anregungen hinsichtlich des Einsatzes der bekannten Polymer-Vorstufen bei der Herstellung von Kunststoffüberzügen für Lichtleitfasern zu vermitteln.

Wie bereits erwähnt, unterliegen beim erfindungsgemäßen Verfahren die Polymer-Vorstufen bei der thermischen Behandlung einer Cyclisierung, wobei hochwärmebeständige Polymere gebildet werden. Aufgrund der speziellen Auswahl der Vorstufen werden dabei folgende Polymersysteme erhalten : Polyimide, einschließlich Polyamidimide und Polyesterimide, Polyisoindolochinazolindione, Polyoxazindione, Polychinazolindione und Polyoxazinone.

Anhand von Ausführungsbeispielen soll die Erfindung noch näher erläutert werden.

Beispiel 1

Aus Pyromellithsäuredianhydrid, β-Hydroxyäthylmethacrylat und 4,4'-Diaminodiphenyläther wird — gemäß der DE-C-2 437 348 — ein Polyamidocarbonsäureester mit einer Viskositätszahl von 21 hergestellt. 50 Gewichtsteile dieses Polyamidocarbonsäureesters werden in 50 Volumenteilen Dimethylacetamid gelöst und unter Druck durch ein 5 µm-Filter filtriert. Anschließend wird die Lösung in eine Küvette mit einem Kapillardurchmesser von 180 µm gegeben. Durch diese Küvette wird eine 125 µm starke Glasfaser mit einer Geschwindigkeit von 10 m/min gezogen. Die mit der Lösung der Polymer-Vorstufe behaftete Glasfaser passiert dann zunächst einen Trockenofen mit einer Temperatur von ca. 600 °C und anschließend eine Heizstrecke mit einer Temperatur von ca. 400 °C. Die auf diese Weise erhaltene Lichtleitfaser weist einen gleichmäßigen Kunststoffüberzug aus Polyimid mit einer Schichtstärke von ca. 20 µm auf.

Beispiel 2

50 Gewichtsteile eines — entsprechend DE-C 24 37 348 — aus Pyromellithsäuredianhydrid, β-Hydroxyäthylmethacrylat und 4,4'-Diaminodiphenylmethan hergestellten Polyamidocarbonsäureesters mit einer Viskositätszahl von 18 werden zusammen mit 2 Gewichtsteilen N-Phenyl-maleinimid und 1 Gewichtsteil Michlers Keton in 55 Volumenteilen N-Methylpyrrolidon gelöst. Diese Lösung wird unter Druck durch ein 5 µm-Filter filtriert und entsprechend Beispiel 1 auf eine Glasfaser mit einem Durchmesser von 125 µm aufgebracht. Anschließend an die Beschichtungsküvette passiert die mit der Lösung der Polymer-Vorstufe behaftete Glasfaser eine zentrisch angeordnete UV-Lichtstrecke (mit drei 500 Watt-Quecksilberhöchstdrucklampen) und wird dann durch einen Ofen mit einer Temperatur von ca. 500 °C geführt. Auf diese Weise wird eine gleichmäßige Beschichtung mit einer Dicke von ca. 25 µm erhalten.

Beispiel 3

Gemäß der DE-C 23 08 830 wird aus Pyromellithsäuredianhydrid, Allylalkohol und p,p'-Diaminodiphenylmethandiisocyanat ein Polyamidocarbonsäureester hergestellt. 30 Gewichtsteile dieser Polymer-Vorstufe werden zusammen mit 4 Gewichtsteilen Triallylcyanurat in 30 Volumenteilen Dimethylacetamid

gelöst und die Lösung wird unter Druck durch ein 5 µm-Filter filtriert. Nach der Beschichtung gemäß Beispiel 1 und einer thermischen Behandlung bei einer Temperatur von ca. 600 °C wird eine Lichtleitfaser mit einer gleichmäßigen Kunststoffbeschichtung von ca. 19 µm erhalten.

Beispiel 4

Werden dem Gemisch nach Beispiel 3 vor der Filtration 0,5 Gewichtsteile Azo-bis-isobutyronitril zugesetzt, so wird — bei einem entsprechenden Vorgehen — eine gleichmäßige Kunststoffbeschichtung mit einer Stärke von ca. 22 µm erhalten.

Beispiel 5

20 Gewichtsteile einer Polymer-Vorstufe aus Pyromellithsäuredianhydrid, Allylalkohol und 2,4-Diaminopyridin gemäß DE-C 23 08 830 werden zusammen mit 2 Gewichtsteilen N,N'-Bis-(2,4-diallyloxy-s-triazin-6-yl)-diaminoäthan in 25 Volumenteilen N-Methylpyrrolidon gelöst und filtriert (5 µm-Filter). Nach der Beschichtung in der vorstehend in Beispiel 1 beschriebenen Weise und einer thermischen Behandlung bei ca. 600 °C wird eine gleichmäßige Kunststoffbeschichtung mit einer Dicke von ca. 21 µm erhalten.

**Ansprüche**

1. Verfahren zur Herstellung eines zugfesten Lichtwellenleiters mit einer auf der Lichtleitfaser befindlichen Kunststoffschicht durch Aufbringen einer härtbaren Polymer-Vorstufe auf die Lichtleitfaser unmittelbar nach dem Faserziehproseß, dadurch gekennzeichnet, daß auf die Lichtleitfaser als Polymer-Vorstufe aus einer Lösung ein oligomeres und/oder polymeres Polyadditions- oder Polykondensationsprodukt aus einer zwei für Additions- bzw. Kondensationsreaktionen geeignete Carboxyl-, Carbonsäurechlorid-, Amino-, Isocyanat- oder Hydroxylgruppen tragenden carbocyclischen oder heterocyclischen Verbindung und einem Diamin, einem Diisocyanat, einem Bis-säurechlorid oder einer Dicarbonsäure aufgebracht wird, wobei die cyclischen Kettenglieder der Polymer-Vorstufe über Brücken mit Amidpartialstrukturen verbunden sind und die carbocyclische bzw. heterocyclische Verbindung in Nachbarstellung zu den für Additions- bzw. Kondensationsreaktionen geeigneten Gruppen teilweise Ester-, Amid-, Urethan- oder Harnstoffgruppierungen besitzt, die gegebenenfalls ungesättigt sind, und daß nachfolgend mit aktinischem Licht bestrahlt und/oder thermisch behandelt wird, wobei die Polymer-Vorstufen in Polyimide, Polyisoindolochinazolindione, Polyoxazindione, Polychinazolindione oder Polyoxazinone übergeführt werden.

2. Verfahren nach Anspruch 1, dadurch gekennzeichnet, daß zusätzlich monomere und/oder oligomere mono- oder polyfunktionelle Vernetzungsbeschleuniger verwendet werden.

3. Verfahren nach Anspruch 1 oder 2, dadurch gekennzeichnet, daß als Lösungsmittel Dimethylacetamid oder N-Methylpyrrolidon verwendet wird.

4. Verfahren nach einem der Ansprüche 1 bis 3, dadurch gekennzeichnet, daß auf die Kunststoffschicht eine Gleitschicht aufgebracht wird.

**Claims**

1. A process for the production of a tension-proof light waveguide having a synthetic resin layer, present on the light-conducting fibre, by the application of a hardenable pre-polymer to the light conducting fibre immediately after the fibre-drawing process, characterised in that as a pre-polymer, there is applied from solution to the light-conducting fibre, an oligomeric and/or polymeric polyaddition or polycondensation product from a carbocyclic or heterocyclic compound containing two carboxyl, carboxylic acid chloride, amino, isocyanate, or hydroxyl groups, which are suitable for addition or condensation reactions, and a diamine, a diisocyanate, a bis-acid chloride, or a dicarboxylic acid, wherein the cyclic chain members of the pre-polymer are connected by bridges having partial amide structures, and the carbocyclic or heterocyclic compound, in a neighbouring position relative to the groups suitable for addition or condensation reactions, partially has ester, amide, urethane or urea groupings which are unsaturated, if necessary ; and that irradiation with actinic light and/or thermal treatment is subsequently carried out, the pre-polymers being converted to polyimides, polyisoindoloquinazolindiones, polyoxazindiones, polyquinazolindiones, or polyoxazinones.

2. A process according to Claim 1, characterised in that monomeric and/or oligomeric mono- or polyfunctional cross-linking accelerators are additionally used.

3. A process according to Claim 1 or Claim 2, characterised in that dimethylacetamide or N-methylpyrrolidone is used as a solvent.

4. A process according to one of Claims 1 to 3, characterised in that a sliding layer is applied to the synthetic resin layer.

**Revendications**

1. Procédé de fabrication d'un guide d'onde optique résistant à la traction, avec une couche de matière plastique se trouvant sur la fibre optique, par dépôt d'un précurseur de polymère durcissable sur la fibre optique immédiatement après le processus de tirage de la fibre, caractérisé en ce qu'il consiste à déposer sur la fibre optique, à partir d'une solution et à titre de précurseur de polymère, un produit polymère de poly-addition ou de polycondensation, constitué d'un composé carbocyclique ou hétérocyclique portant deux groupes carboxyle, chlorure d'acide carboxylique, amino, isocyanate, ou hydroxy qui conviennent pour des réactions d'addition et de condensation et d'une diamine, d'un diisocyanate, d'un bis-chlorure d'acide, ou d'un acide dicarboxylique, les chaînons cycliques du précurseur de polymère étant reliés aux structures partielles amido par l'intermédiaire de ponts, et le composé carbocyclique ou hétérocyclique ayant, en position adjacente aux groupes qui conviennent pour des réactions d'addition et de condensation, des groupements ester partiel, amide, uréthanne, ou urée, éventuellement insaturés et à irradier ensuite, par de la lumière actinique et/ou à traiter thermiquement, les précurseurs de polymère étant transformés en polyimide, en polyisoindoloquinazolinedione, en polyoxazinedione, en polyquinazolinedione ou en polyoxazinone.

2. Procédé suivant la revendication 1, caractérisé en ce qu'il consiste à utiliser, en plus, des accélérateurs de réticulation monomères et/ou oligomères monofonctionnels ou polyfonctionnels.

3. Procédé suivant la revendication 1 ou 2, caractérisé en ce qu'il consiste à utiliser comme solvant du diméthylacétamide ou de la N-méthylpyrrolidone.

4. Procédé suivant l'une des revendications 1 à 3, caractérisé en ce qu'il consiste à déposer sur la couche de matière plastique une couche de glissement.